# EUROPEAN PATENT SPECIFICATION

(11) **EP 0 967 879 B1**
(45) Date of publication and mention of the grant of the patent: **09.04.2003**
(21) Application number: 98901609.2
(22) Date of filing: 09.01.1998
(51) Int. Cl.: A21B 3/07, F24C 15/16

(54) **BAKING MEANS**
BACKVORRICHTUNG
MOYENS DE CUISSON DE BOULANGERIE

(30) Priority: 21.01.1997 SE 9700160
(43) Date of publication of application: 05.01.2000
(73) Proprietor: Westbergh, Jan, 620 13 Stanga (SE)
(72) Inventor: Westbergh, Jan, 620 13 Stanga (SE)
(74) Representative: Arwidi, Bengt
(86) International application number: SE9800006
(87) International publication number: WO98031230

(56) References cited:
- WO-A-92/11765
- DE-A- 2 616 329
- GB-A- 189 524 278
- US-A- 4 020 310

## Description

The present invention is for a baking means being a stand or a cart for baking in closed molds. Preferably the baking means is a cart for rack ovens.

Rack ovens are frequently used in bakeries for baking of large quantities of loafs and the like bread. These ovens have hearths which extend themselves so far downwards that they may be loaded by gathering a desired number of moulds on a cart which is pushed into the oven. On the cart there are baking molds at several levels up to a highest useable height which means that the height of the cart may be more than 1500 mm, its width and length are typically 400-700 mm. In a common embodiment of the cart there are ten shelves on which the molds are put. In order to make the job easier the shape of the shelves may be adapted to that of the molds. The shelves may also be removable and movable on guides. If the molds are to be covered during the baking removable lids are used and usually one lid covers all of the molds on one shelf.

In order that they shall withstand the heat the lids are made from stell and due to their size they become comparatively heavy. They are also placed at different heights and thus the handling of the lids is time consuming, complicated and brings with it erginomically unsiutable conditions of work. In many cases one lifts shelf, moulds with contents and lid as one unit which is comparatively heavy.

It is an object of the present invention to simplify or eliminate the handling of the lids to achieve a faster process and substantially eliminate the ergonomic disadvantages. The invented means has those characteristics which are included in claim 1. The characteristics of some embodiments of the invention are included in the other claims.

The invention will below be described with reference to the embodiment which is shown in the enclosed figures.

Figure 1 shows a rack oven cart according to the invention.

Figure 2 shows parts of the cart of figure 1 viewed from the operating side.

Figure 3 shows parts of the means in a side view at right angle to that of figure 2.

Figure 4 shows the means of figure 3 with the baking molds removed.

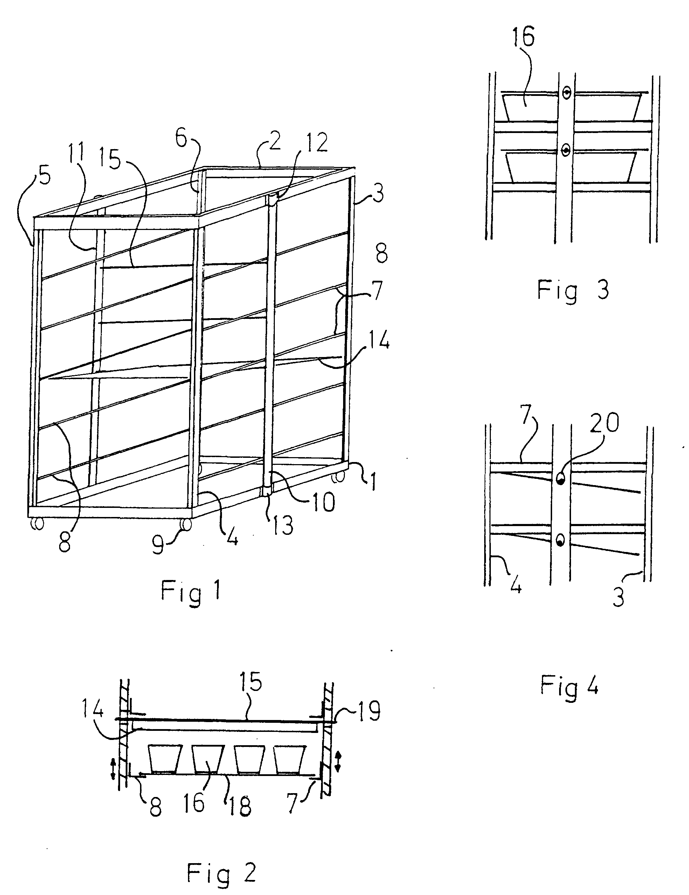

The cart shown in figure 1 has a lower, horizontal frame 1 and a corresponding upper frame 2.These, as well as the other parts of the means, are made from steel of a quality which is suitable for the operating conditions which are at hand in bakery operations with oven temperatures up to 250°C. The frames are connected with each other by corner posts 3, 4, 5, 6. Between the posts there are rails or guides 7, 8 arranged in pairs at the same height which are intended to carry free or removable shelves or plates 18. A desired number of baking molds 16 are placed on each shelf 18. One means is often adapted for 8-12 shelves, the means shown in the figures has somewhat fewer shelves.

In operation molds and/or shelves are taken out from and put into the cart from the same side which is the side which is the front side in figures 1 and 2. Appproximately in the middle of the sides which are at right angkes thereto there are at each side a vertical bar 10, 11. Each of the bars is movable in vertical direction and mounted in slide bushings 12, 13, for each bar there is one bushing at each of the upper and lower frames. The bars may be made from iron plates, tubes or profiled bars of for example L- or U-shape. Moving of the bars is suitably by means of arrangements which are operated by a foot pedal, not shown in the figures. The motion is delimited by an upper and a lower end position.

In the bars 10, 11 there are a number of holes 20 which corresponds to the number of shelves. The holes are so positioned that they are about at even height with the upper rims of the moulds 16 when the bars are in their lowered positions. For each pair of holes there is a shaft 15 which extends itself between the bars and through the corresponding holes. A lid 14, which is somewhat smaller than the free surface between the corner posts and large enough to cover all of the moulds on one shelf, is attached to each shaft. Lid and shaft may rotate freely in the holes 20 of the bars 10;11. The end positions for the bars 10, 11 are so positioned that the lids rest on the moulds when the bars are at their lowest positions and when the bars are at their upper positions the shafts are in contact with or very close to the nearset above positioned guides 7, 8.

The procedure at baking is as follows. The moulds which have been filled with dough are put on trays 18. Using the above mentioned means the bars 10, 11 and thus the lids 14 are moved to their upper positions and are kept there while the plates are pushed in on the guide rails. When all of the plates have been put in the bars and the lids are lowered so that the lids rest on the moulds whereupon the cart is pushed into the rack oven and the baking takes place. When it is finished the cart is removed from the oven, the bars and the lids are raised in the same manner as before and the plates or the individual moulds are removed from the cart.

In a preferred embodiment of the invention the lids 14 are attached to the underside parts of the shafts 15. The shafts are somewhat displaced relative to the middle of the lids so that the part of the lids which is towards the operating side turn upwards and so makes the removal of the moulds easier. The movement is delimited by that the lids stike a stopper which can be the most adjacent above guides or rails as shown in figure 4. Preferrably the holes 20 are ellitical or elongated so that the lids have some freedom to get into individual positions.

## Claims

1. Means for baking in rack ovens in moulds which are positioned at several levels above each other and where all of the moulds during the baking are covered by lids characterized therein that it comprises a stand with several pairs of horizontal rails or guides (7, 8) which are arranged to directly or by means of shelves (18) carry the moulds (16) and lids (14) which can be raised and lowered, each of the lids covering all of the moulds (16) on one shelf (18) and which are arranged to be rotated by means of horizontal shafts (15) which can be vertically displaced in the rack in order to lift the lids of the moulds.

2. Means according to claim 1 characterized therein that the shafts are mounted to vertically movable operating bars (10, 11).

3. Means according to claim 2 characteized therein that the bars have elliptic or extended holes through which the shafts extend themselves.

4. Means according to any of the preceeding claims characterized therein that the shafts are mounted to the lids some what displaced from their middle line.

## Patentansprüche

1. Einrichtung zum Backen in Gestellöfen in Formen, die auf verschiedenen Ebenen übereinander angeordnet sind, und wobei alle der Formen während des Backens mit Deckeln abgedeckt sind, **dadurch gekennzeichnet, dass** sie einen Ständer mit mehreren Paaren horizontaler Schienen bzw. Führungen (7, 8) umfasst, die direkt oder mittels Einschüben (18) die Formen (16) und Deckel (14) tragen, die angehoben und abgesenkt werden können, wobei jeder der Deckel (14) alle Formen (16) auf einem Einschub (18) abdeckt, und die mittels horizontaler Wellen (15) gedreht werden können, die vertikal in dem Gestell verschoben werden können, um die Deckel der Formen anzuheben.

2. Einrichtung nach Anspruch 1, **dadurch gekennzeichnet, dass** die Wellen an vertikal beweglichen Betätigungsstangen (10, 11) angebracht sind.

3. Einrichtung nach Anspruch 2, **dadurch gekennzeichnet, dass** die Stangen elliptische oder längliche Löcher aufweisen, durch die sich die Wellen selbst hindurch erstrecken.

4. Einrichtung nach einem der vorangehenden Ansprüche, **dadurch gekennzeichnet, dass** die Wellen an den Deckeln gegenüber ihrer Mittellinie leicht verschoben angeordnet sind.

## Revendications

1. Moyens pour cuire dans des fours en forme d'étagères dans des moules qui sont positionnés à plusieurs niveaux les uns au dessus des autres et où tous les moules pendant la cuisson sont recouverts par des couvercles, **caractérisés en ce que** ces moyens comportent un bâti ayant plusieurs paires de rails ou guides (7, 8) horizontaux qui sont disposés pour transporter, directement ou au moyen de rayonnages (18), les moules (16) et les couvercles (14) pouvant être soulevés et abaissés, chacun des couvercles recouvrant tous les moules (16) sur un rayonnage (18) et étant disposés pour être tournés au moyen d'arbres (15) horizontaux qui peuvent être déplacés verticalement dans l'étagère afin de soulever les couvercles des moules.

2. Moyens suivant la revendication 1, **caractérisés en ce que** les arbres sont montés sur des barres (10, 11) d'actionnement mobiles verticalement.

3. Moyens suivant la revendication 2, **caractérisés en ce que** les barres ont des trous elliptiques ou étendus par lesquels les arbres eux-mêmes s'étendent.

4. Moyens suivant l'une quelconque des revendications précédentes, **caractérisés en ce que** les arbres sont montés sur les couvercles quelque peu décalés par rapport à leur ligne médiane.
